# EUROPEAN PATENT APPLICATION

(11) **EP 2 610 140 A1**
(43) Date of publication of application: **03.07.2013**
(21) Application number: 11010259.7
(22) Date of filing: 28.12.2011
(51) Int. Cl.: B62D 5/093, F04C 2/10

(54) **Hydraulic device**

(71) Applicant: Sauer-Danfoss ApS, 6430 Nordborg (DK)
(72) Inventor: Arbjerg, Niels, 6470 Sydals (DK)
(74) Representative: Knoblauch, Andreas

(57) **Abstract**

A hydraulic device (1) is provided, comprising a housing (2), a gear wheel set (9) arranged in said housing (2), said gear wheel set (9) comprising an internally-toothed ring (12) and an externally-toothed star (10), the star having a number of teeth (11), said number differing from the number of teeth (13) of the ring, the star (10) being arranged between a first plate (16) and a second plate (17).

Such a steering device should have a torque as low as possible in emergency steering.

To this end the star (10) comprises at least one through-hole (22) connecting a face of the star (10) adjacent the first plate (16) with a face of the star (10) adjacent the second plate (17).

## Description

The invention relates to a hydraulic device comprising a housing, a gear wheel set arranged in said housing, said gear wheel set comprising an internally-toothed ring and an externally-toothed star, the star having a number of teeth, said number differing from the number of teeth of the ring, the star being arranged between a first plate and a second plate.

Such a hydraulic device designed as hydraulic steering device is known from US 4 759 182, US 4 862 690, and US 4 620 416.

The invention is described in connection with a steering device as a non-limiting example. Such a hydraulic steering device comprises direction valve means arranged in the housing. The direction valve means comprise basically an inner valve element, commonly referred to as "spool", and an outer valve element, commonly referred to as "sleeve". The spool is rotatably arranged within the sleeve, and the sleeve is rotatably arranged in a bore of the housing. The spool and the sleeve together form a number of orifices allowing a flow of hydraulic fluid from a pressure port to one of two working ports and from the other of the two working ports back to a tank port.

A steering wheel (or another steering means) is connected to the spool. When the steering wheel is actuated, the spool is rotated relative to the sleeve and some of the orifices are opened. The hydraulic fluid passing through the orifices flows into the gear wheel set and from there to the working port. The hydraulic fluid entering the gear wheel set drives the star which rotates relatively to the ring. The star is coupled to the sleeve and rotates the sleeve relatively to the ring so that the sleeve and the ring are brought back to their neutral position when a desired amount of hydraulic fluid has been delivered to the working port.

The gear wheel set in such a steering device is used as fluid meter, but can also be used as an auxiliary pump in cases in which the pressure at the pressure port disappears and the vehicle should still be steered. In this case, the driver of the vehicle has to turn the steering wheel not only to give the desired direction to the vehicle but also to generate a sufficient pressure to actuate a steering motor connected to the steering device.

In order to have a good efficiency during the operation of the hydraulic steering device, the gear wheel set should be as tight as possible. This can be achieved by holding the two plates together with a rather high force. However, such a high force causes friction which must be overcome in the emergency steering mode.

The task underlying the invention is to have the friction as low as possible.

This task is solved in a hydraulic device of the kind mentioned above in that the star comprises at least one through-hole connecting a face of the star adjacent the first plate with a face of the star adjacent the second plate.

The though-hole or though-holes enable a balancing of the star, i.e. the star is loaded on its both sides with the same hydraulic pressure. Therefore, the friction between the star and the two plates can be minimised. Both faces of the star can be lubricated by the hydraulic fluid and the forces acting on both faces of the star in an axial direction can be made almost equal. Since the path for the hydraulic fluid between the two sides of the star is provided within the star, no changes in the housing are necessary. This makes the construction simple and reliable. When a plurality of through-holes is used, the risk that the path is completely clogged is minimised. Even if one of the through-holes is blocked by dirt or the like a balancing of the star is still possible.

In a preferred embodiment of the hydraulic device the star comprises at least one groove on each side, said grooves of both sides being connected by said at least one through-hole. The grooves are used to distribute the hydraulic fluid over the surfaces on both sides of the star thus equalising the pressure over the area of the star.

Preferably, said grooves each form a circle surrounding an axis of said star. The hydraulic fluid between the star and the plates is distributed in circumferential direction so that the tilting of the star can be avoided.

Preferably, the through-holes are arranged in an area which is limited by the feet of the teeth. In this case, the teeth are not weakened by the through-holes. The teeth are the parts of the star on which the forces act to rotate the star or - in the emergency steering or pump mode - they are the parts generating the pressure in the hydraulic fluid. Therefore, it is advantageous that the teeth are as stable as possible.

In a preferred embodiment the star has a reduced thickness in said area. This is an additional feature to reduce friction between the star and the two plates. In the area having the reduced thickness the contact pressure between the star and the two plates is further reduced.

Preferably, the reduced thickness is at most 10 µm, preferably at most 5 µm, smaller than the thickness out of said area. In a preferred embodiment the reduced thickness is only 3 µm smaller than the thickness out of said area. The star is not weakened by the reduction of thickness.

Preferably, the through-holes have a diameter of not more than 2 mm. It is sufficient to have rather small through-holes since the through-holes have the function to pass hydraulic fluid in axial direction from one side of the star to the other side. To this end a small diameter is sufficient. The star has sufficient stability to withstand the forces occurring during operation.

Preferably, the through-holes have a diameter of at least 1 mm. Although it is preferred that the diameter is as small as possible, a diameter of at least 1 mm makes simple the production. A bore drill of 1 mm diameter is usually stable enough to produce a number of holes.

Preferably, the through-holes are distributed evenly. Changes in the pressure on one side can easily be transmitted to the other side so that the star is balanced during steering.

A preferred example of the invention will now be described in more detail with reference to the drawing, wherein:
- Fig. 1: is a longitudinal section of a hydraulic device,
- Fig. 2: is a section II-II of Fig. 1, and
- Fig. 3: is another embodiment of a star.

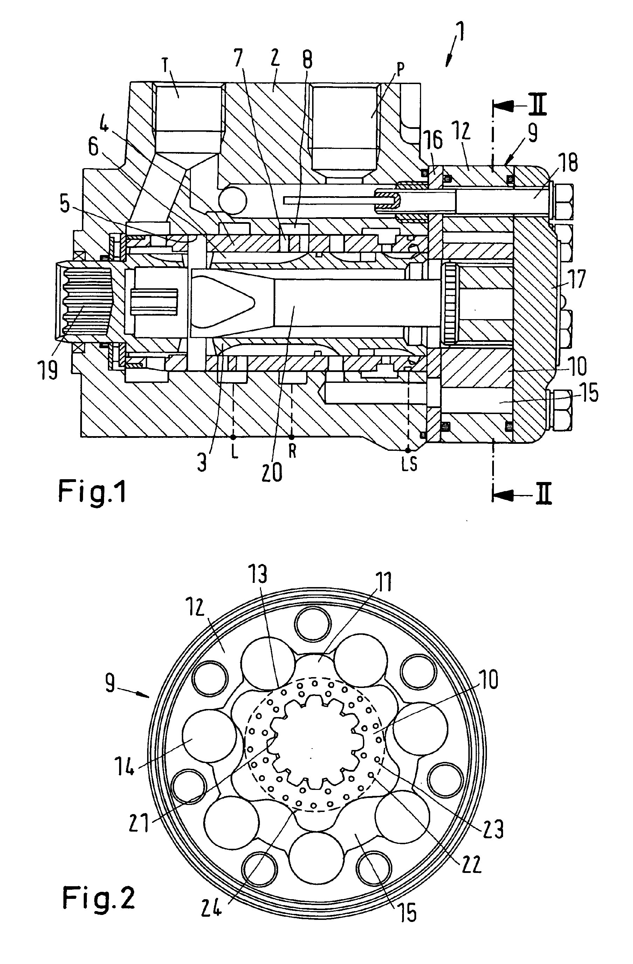

Fig. 1 shows a hydraulic steering device 1 as an example of a hydraulic device having a housing 2. The housing is provided with a pressure port P, a tank port T, and two working ports L, R.

The steering device 1 comprises a direction valve, said direction valve comprises an inner valve element or spool 3 and an outer valve element or sleeve 4. The sleeve 4 is arranged rotatable in a bore 5 of the housing 1. The spool 3 is positioned rotatable within the sleeve 4. The spool 3 has a plurality of grooves 6 cooperating with bores 7 in the sleeve 4. The bores 7 open into grooves 8 in the wall of the bore 5. The bores 7 and the grooves 6 together form variable orifices as it is known in the art.

The steering device 1 further comprises a gear wheel set 9 used as a fluid meter. The gear wheel set 9 comprises a star 10 having a plurality of teeth 11 extending radially outwardly. Furthermore, the gear wheel set 9 comprises a ring 12 having a number of teeth 13 extending radially inwardly. In the present case, the teeth 13 are formed by rollers 14. However, a ring 12 without rollers 14 can be used as well, the inwardly extending teeth 13 being integral with the ring 12. The star 10 has one tooth less than the ring 12. Therefore, a plurality of chambers 15 is formed between the star 10 and the ring 12. As it is known in the art, the chambers 15 are supplied with hydraulic fluid under pressure in order to expand a chamber 15 or the fluid is released from the chamber 15, when the volume of the chamber 15 decreases.

The star 10 is arranged between a first plate 16 and a second plate 17. Those plates 16, 17 are clamped together by means of bolts 18.

The spool 3 comprises a coupling 19 by which the spool 3 can be coupled to the shaft of a steering wheel or the like. When the steering wheel is turned, the spool 3 is rotated relatively to the sleeve 4 and opens some orifices and closes some other orifices as it is known in the art. Hydraulic fluid under pressure flows from the pressure port P to the gear wheel set 9 driving the star 10 which rotates and orbits within the ring 12. Fluid escaping from the gear wheel set 9 is guided through one of the working ports L, R. The rotational movement of the star 10 is transmitted to the sleeve 4 by means of a dog bone 20 which is in engagement with the star 10 via another coupling 21. When the star 10 rotates, the sleeve 4 is rotated relatively to the spool 3 in order to bring the spool 3 and the sleeve 4 again in neutral position.

When the pressure at the pressure port P drops and the vehicle equipped with the steering device 1 has still to be steered, the gear wheel set 9 can be used as auxiliary pump. The torque for driving this pump is produced by the driver of the vehicle via the steering wheel.

As mentioned above, the star 10 is arranged between the two plates 16, 17 which are clamped together. This causes a friction between the star 10 and the two plates 16, 17. This friction is increased when the pressure on one side of the star 10 is larger than the pressure on the other side of the star 10.

In order to overcome this inconvenience, the star 10 is provided with a plurality of through-holes 22. The through-holes 22 are distributed evenly over an area 23 which is not part of the teeth 11. In order to facilitate the explanation, a circle 24 is shown by a dashed line. This circle defines the radially inner boundary of the teeth 11. The through-holes 22 are arranged within said circle 24.

The through-holes 22 have a diameter of not more than 2 mm and preferably of at least 1 mm. In an example 42 through-holes having each a diameter of 1 mm have been used. In another example, the star 10 has 18 through-holes, each having a diameter of 2 mm.

The through-holes allow hydraulic fluid under pressure to pass axially from one side of the star 10 to the other side, and therefore to balance the star 10 so that friction between the star 10 and the two plates 16, 17 can be kept as low as possible.

Since the through-holes 22 are arranged out of the teeth 11, the teeth 11 are not weakened by the through-holes 22. Nevertheless, the through-holes 22 enable balancing of the star 10. The star 10 has a reduced thickness in said area 23. The thickness reduction is rather small. In the area 23 the star 10 has a thickness which is not more than 10 µm smaller than the thickness of the teeth 11. Preferably, the difference in thickness between the area 23 and the teeth 11 is not more than 5 µm and in a particularly advantageous example the difference is only 3 µm. This further reduces friction between the star 10 and the plates 16, 17.

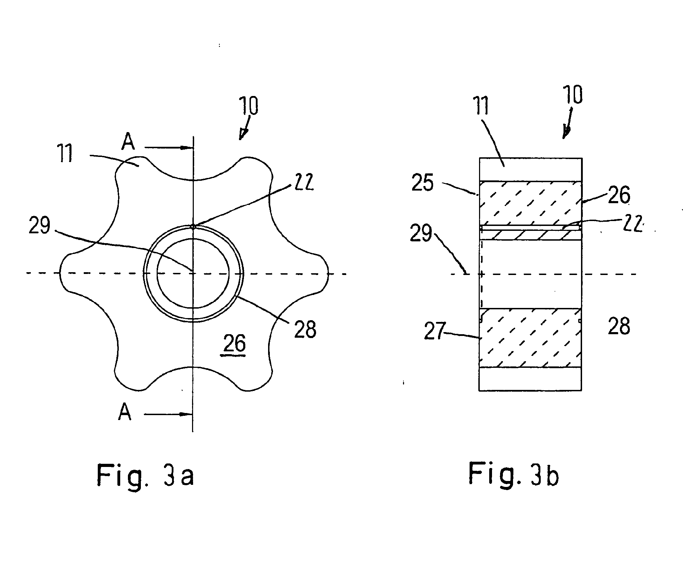

Fig. 3 shows another embodiment of a star 10. Fig. 3a shows a front view on the star and Fig. 3b shows a section A-A of Fig. 3a. Elements being the same as in Fig. 2 are illustrated with the same reference numerals.

The star 10 comprises a front side 25 and a rear side 26. Each side is provided with a groove 27, 28. The grooves 27, 28 have the form of a circle surrounding an axis 29 of the star 10. The two grooves 27, 28 are connected by at least one through-hole 22. However, more than the one through-hole 22 can be used. Furthermore, it is possible to use more than only one groove on each side 25, 26.

The steering device illustrated in connection with the drawing can be used in a steering system having a priority valve in a steering system without a priority valve.

The steering system can be a reaction steering system meaning that the driver wheel feels at the steering an effect of a force acting on the steered wheels. It can be used as well in a non-reaction system in which the driver does not feel the effect of forces acting on the steered wheels when touching the steering wheel.

## Claims

1. A hydraulic device (1) comprising a housing (2), a gear wheel set (9) arranged in said housing (2), said gear wheel set (9) comprising an internally-toothed ring (12) and an externally-toothed star (10), the star having a number of teeth (11), said number differing from the number of teeth (13) of the ring, the star (10) being arranged between a first plate (16) and a second plate (17), **characterized in that** the star (10) comprises at least one through-hole (22) connecting a face of the star (10) adjacent the first plate (16) with a face of the star (10) adjacent the second plate (17).

2. The hydraulic device according to claim 1, **characterized in that** said star (10) comprises at least one groove on each side, said grooves of both sides being connected by said at least one through-hole (22).

3. The hydraulic device according to claim 2, **characterized in that** said grooves each form a circle surrounding an axis of said star (10) (10).

4. The hydraulic device according to any of claims 1 to 3, **characterized in that** the through-holes (22) are arranged in an area (23) which is limited by the feet of the teeth (11).

5. The hydraulic device according to claim 4, **characterized in that** the star (10) has a reduced thickness in said area (23).

6. The hydraulic device according to claim 5, **characterized in that** the reduced thickness is at most 10 µm, preferably at most 5 µm, smaller than the thickness out of said area (23).

7. The hydraulic device according to any of claims 1 to 6, **characterized in that** the through-holes (22) have a diameter of not more than 2 mm.

8. The hydraulic device according to any of claims 1 to 7, **characterized in that** the through-holes (22) have a diameter of at least 1 mm.

9. The hydraulic device according to any of claims 1 to 8, **characterized in that** the through-holes (22) are distributed evenly.
